# EUROPEAN PATENT SPECIFICATION

(11) **EP 2 979 069 B1**
(45) Date of publication and mention of the grant of the patent: **22.04.2020**
(21) Application number: 14721508.1
(22) Date of filing: 27.03.2014
(51) Int. Cl.: G01L 3/10, G08C 17/04, H04Q 9/00

(54) **APPARATUS FOR DYNAMIC MEASUREMENT OF PARAMETERS ON A BODY SUBJECTED TO TWISTING**
VORRICHTUNG ZUR DYNAMISCHEN MESSUNG VON PARAMETERN EINES VERDREHTEN KÖRPERS
APPAREIL DE MESURE DYNAMIQUE DE PARAMÈTRES SUR UN CORPS SOUMIS À UNE TORSION

(30) Priority: 28.03.2013 IT BO20130008
(43) Date of publication of application: 03.02.2016
(73) Proprietor: Autec S.r.l., 48034 Fusignano (RA) (IT)
(72) Inventor: BALSAMINI, Guglielmo, I-48124 Ravenna (IT); BERARDI, Luca, I-44011 Argenta (IT)
(74) Representative: Zermani, Umberto
(86) International application number: PCT/IB2014/060216
(87) International publication number: WO 2014/155334

(56) References cited:
- EP-A2- 1 978 342
- US-A- 5 801 644
- US-A- 6 084 368

## Description

### Technical field

This invention relates to an apparatus for dynamic measurement of parameters on a body subjected to twisting, preferably a rotary shaft.

The invention is applicable in particular to the industrial control sector, more precisely to the real time monitoring of the conditions of a rotary shaft in industrial applications.

In effect, in the application described below reference is made in particular, without in any way limiting the scope of the invention, to the measurement of the forces (twisting) on a shaft rotating about its own axis.

### Background art

Measuring apparatuses are known in the prior art which can be applied on rotary shafts for measuring the forces to which they are subjected during rotation, and it is thus possible to assess the conditions and interrupt use before any failure.

The main critical situation which the technicians in the trade have encountered concerns, currently, the need to feed the measuring unit mounted on the rotary shaft in such a way that it remains operational and reliable during rotation.

To overcome this problem, measurement systems have been introduced that, on the "shaft side", are equipped with batteries or rotary contacts, which, however, are on the one hand not very reliable and have a limited life span and on the other hand are very expensive and wear easily.

An interesting solution is known from patent document US2005017602 which describes the use of the rotation of the shaft for creating an inductive magnetic field which can feed the measuring unit mounted on the shaft.

In this case, if the speed of rotation approaches very low values (for example, just a few revolutions per minute) the quantity of energy transmitted is reduced proportionally until reaching, under almost static conditions, negligible values which are not capable of feeding an electronic circuitry for conditioning the signals and transmission. Disadvantageously, however, all the above-mentioned solutions comprise the use of specific of data transmission means, that is, a transmitter mounted "shaft side" operatively coupled to a receiver for transmitting the data measured by the sensors present on the shaft.

The presence of these elements clearly complicates the structure of the apparatus, necessitating a feed which is able to support the transmitter, as well as a receiver mounted on the "fixed" part of the apparatus which is able to communicate with the above-mentioned "wireless" transmitter, such as, for example, a radio transmitter.

Other devices are known from US 5801644, EP 1978342 and US 6084368.

### Disclosure of the invention

The aim of this invention is to provide an apparatus for dynamic measurement of parameters on a rotatable body which can overcome the above-mentioned drawbacks of the prior art.

More specifically, the aim of this invention is to provide an apparatus for dynamic measurement of parameters on a body subjected to twisting which is easy to make and has high performance levels.

This aim is achieved by the apparatus according to claim 1.

The apparatus comprises a mobile unit, that is, a measuring unit which (at least partly) can be fixed to the body and equipped with a second coil, wound around the body in such a way as to rotate with it, positioned in such a way that it can be fed by the first coil by electromagnetic induction, a second processing unit connected to the second coil for receiving the energy induced in the second coil from the feed unit and a sensor for measuring at least one parameter, fixable to the body, connected to the second processing unit and designed to send to the second processing unit a signal representing the at least one parameter measured.

According to the invention the measuring unit also comprises an energy storage module associated with the second coil, designed for receiving the energy induced by the first coil and connected to the second processing unit and means for monitoring the transmission of energy from the first coil to the second coil associated with the second processing unit for sending a signal representing an interruption in the transmission of energy from the first coil to the second coil; the second processing unit is designed for sending to the second coil a measurement signal correlated with the signal representing the at least one parameter monitored, in response to a reception, by the monitoring means, of the signal representing an interruption in the transmission of energy from the first coil to the second coil, so as to transmit the measurement signal to the feed unit by electromagnetic induction from the second coil to the first coil. Advantageously, in this way it is possible to obtain a precise measurement of the parameter on the body, preferably of the forces on the shaft during its rotation, without the need to implement a wireless communication system, simply by exploiting the principle of the magnetic induction.

The fixed unit and the mobile unit are fully insulated from the galvanic point of view. In other words, the fixed unit and the mobile unit are connectable to separate parts of the plant and do not have in common any electrically conductive parts, either for signalling or feeding. More specifically, the reference grounds, that is, the negative pole of the feeds, are fully insulated (that is, independent) from each other.

Advantageously, this makes it possible to guarantee a greater immunity to electrical or magnetic disturbances. In an industrial context this situation is very much appreciated due to the electromagnetic type noise or large currents which centre on the ground, the potential which theoretically should be zero and therefore a reference potential for all the circuits, in reality changes value creating difficult in transferring information.

Moreover, by keeping the grounds insulated, the mobile unit transfers the information to the fixed unit (in an electromagnetic form) using as reference potential that of the input, that is, the one feeding the fixed part.

In light of this, the signal when the level is distinct and well-defined and, more specifically, eliminating, possible errors when the signal.

In effect, thanks to the insulation of the grounds, each unit (mobile and fixed) refers to its relative ground.

The presence of a position sensor which can be associated with the shaft to be monitored is designed for measuring its angular position. The position sensor can be of any type, such as, for example: inductive (proximity switch) or optical which measures the angular position using a phonic wheel mounted rigidly on the shaft.

The position sensor is associated with the first processing unit (that is, with the processing unit of the fixed unit) and configured to provide information correlated with the angular position of the shaft at each measurement.

The first processing unit is designed to allow the setting (using, for example, the assembly of the sensor or a command programmed by an operator) of at least one predetermined angular position, at which the module for generating the signal interrupts the generation of the control signal.

The programming or setting of the angular position (or reading angle) at which the reading occurs can, therefore, be performed upon the positioning of the sensor and the parts which are used for its operation.

In other words, the first processing unit is designed to receive the signal correlated with the angular position of the shaft from the position sensor, programmed to compare the signal with at least one value for the angular position set and to control the generating module as a function of the comparison.

Thus, when the signal sent by the position sensor corresponds to an angular position of the shaft coinciding with that set, the first processing unit sends to the generating module a signal representing an interruption in the transfer of energy.

Advantageously, in this way it is possible to apply the apparatus according to this invention to any type of plant, also to those which use motors that are able to develop particularly large moments at very low motor revolutions, where it becomes very important to monitor the level of twisting at precise points of the angle followed by the shaft.

### Brief description of the drawings

Further features and advantages of the invention are more apparent in the detailed description below, with reference to a preferred, non-limiting, embodiment of an apparatus and a method for dynamic measurement of at least one parameter on a body subjected to twisting, as illustrated in the accompanying drawings, in which:

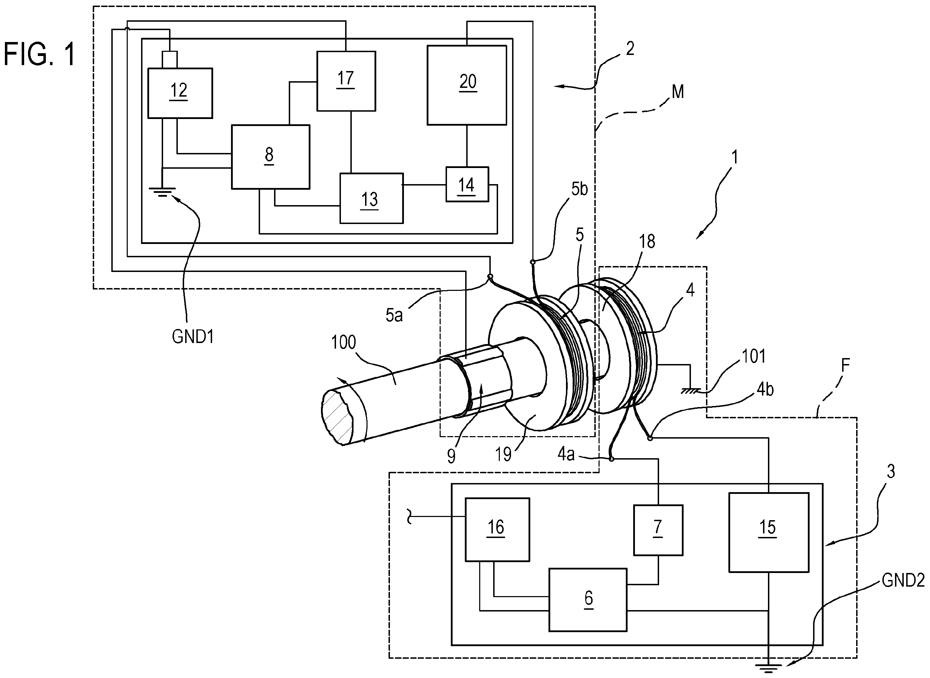

- Figure 1 is a schematic perspective view of the measurement apparatus according to this invention;

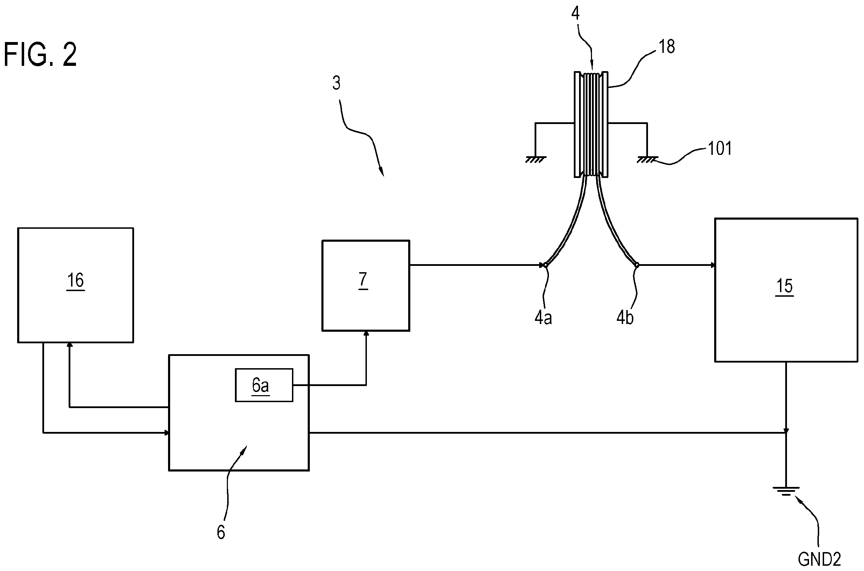

- Figure 2 is a schematic view of a detail of the apparatus of Figure 1;

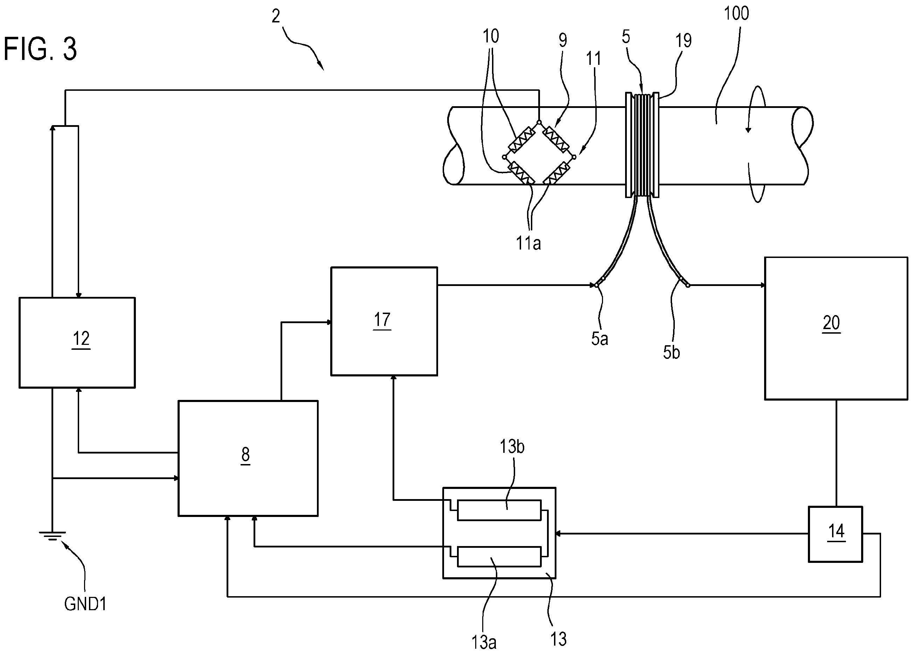

- Figure 3 is a schematic view of a detail M of the apparatus of Figure 1;

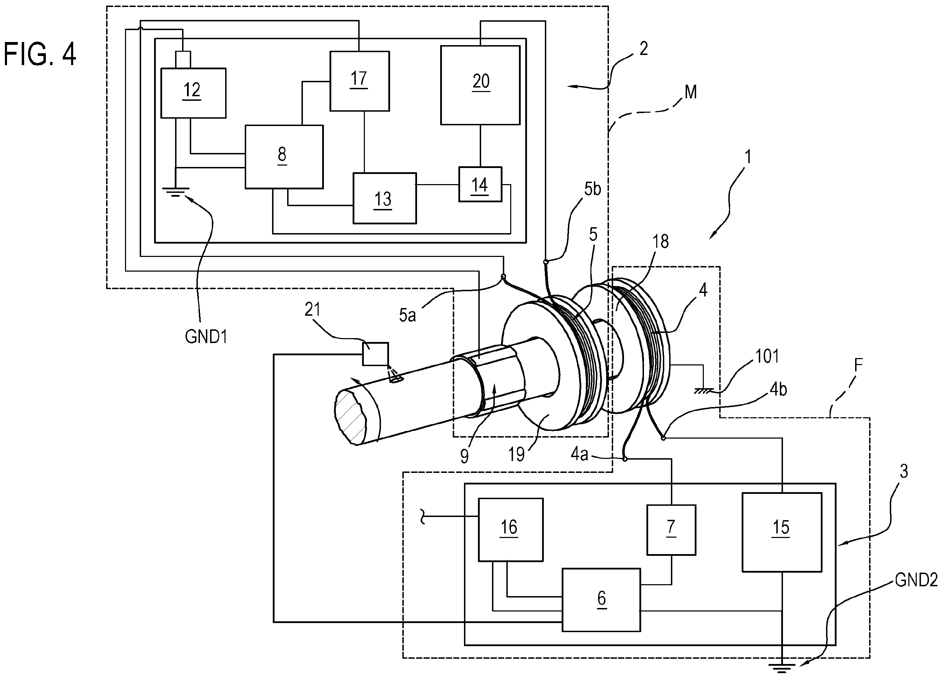

- Figure 4 is a schematic perspective view of the measurement apparatus according to this invention;

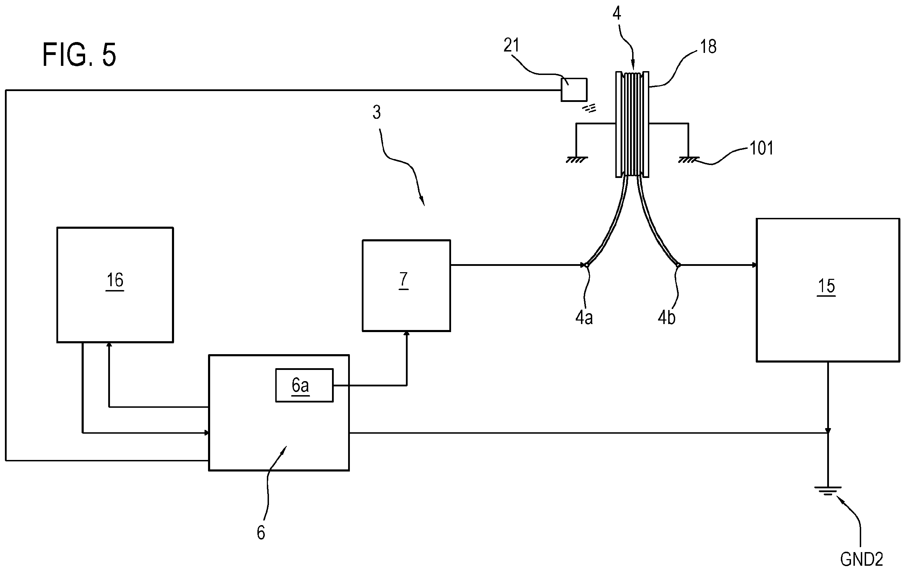

- Figure 5 is a schematic view of a detail F of the apparatus of Figure 4;
- Figures 6a-6c are schematic views of different embodiments of a detail of the apparatus of Figure 4.

### Detailed description of preferred embodiments of the invention

With reference to the accompanying drawings, the numeral 1 denotes an apparatus for dynamic measurement of at least one parameter on a body 100 subjected to twisting and preferably rotatable relative to a frame 101, according to this invention.

Preferably, the measurement apparatus 1 applies in an industrial context and is associated with (that is, mounted on) an industrial plant wherein the frame 101 rises from a base (not illustrated) in a fixed and stable fashion, whilst the shaft 100 is rotatable relative to the frame about its own axis. Thus, the body 100 is rotatable about its axis, or subjected to a twisting action about the axis.

More specifically, reference is made hereinafter to the measurement of parameters on a rotary shaft 100, but without thereby limiting the scope of the invention.

More specifically, reference will be made below to a rotary shaft, with the only aim of simplifying a body subjected to twisting, since the apparatus 1 according to this invention is designed to measure parameters, and in particular the twisting force, even in the absence of a free rotation.

Moreover, it should be noted that, hereafter, the parameter measured will be considered to be the twisting force (or forces) on the shaft during its rotation; it should be noted that other parameters could be measured and transmitted using the apparatus according to this invention.

The apparatus 1 is divided mainly into two units, a measuring unit 2, or mobile unit at least partly fixable rigidly to the shaft 100 and rotatable with it, and a feed unit 3, or fixed unit, which substantially feeds the measuring unit 2, upon receiving measuring data and, preferably, transfers the data to a control system of the plant wherein the shaft 100 is operating.

More specifically, the feed unit 3 and the measuring unit 2 comprise, respectively, a first 4 and a second 5 coil extending between respective first 4a, 5a and second 4b, 5b ends.

The second coil 5 is, in use, wound on the shaft 100 and rotatable with it.

The first coil 4 is positioned coaxially to the second coil 5, in such a way that the second coil 5 is rotatable relative to it.

The coils 4, 5 may comprise one or more turns, the precise number of which can be defined at the design stage as a function of the intensity of a magnetic field to be obtained (as described in more detail below). Preferably, each coil 4, 5 is associated with (that is, wound on) a respective support 18, 19, preferably with an annular shape.

The support 18 of the first coil 4 is positioned about the shaft 100, fixed to it; the support 19 of the second coil 5 is positioned about the shaft 100, keyed on it.

The supports 18, 19 are made of non-ferromagnetic material so as not to interfere with the magnetic field generated by the respective coils 4, 5. Preferably, the supports are made of plastic, ABS Nylon or suitable resins. In the embodiment illustrated, the first coil 4 is coaxial with and facing the second coil 5, preferably positioned at a distance from it of between 1 mm and 50 mm (more preferably equal to approximately 10 mm).

It should be noted that the distance must be such as to allow the electromagnetic induction from the first coil 4 to the second coil 5 and vice versa.

Alternatively, in applications of limited axial extension of the shaft 100, the first coil 4 and the second coil 5 could be concentric with each other.

Between the two ends 5a, 5b of the second coil 5 extends the measuring unit 2, mounted on the shaft 100, which can be powered by magnetic induction from the first coil 4, through which a current generated by the feed unit 3 flows.

More specifically, the feed unit 3, which can be associated with the frame 101 and is stationary relative to the rotation of the shaft 100, is equipped with a first processing unit 6 associated with the (first end 4a of the) first coil 4 and equipped with a generating module 6a configured for generating a signal S1 and sending it to the first coil 4 (in particular to the first end 4a) in such a way as to feed the second coil 5 by electromagnetic induction.

Moreover, preferably, the feed unit 3 is equipped with an amplifier module 7 associated with the generating module 6a of the first processing unit 6 and configured for increasing the power of the control signal S1 up to a predetermined transmission value, so as to allow the inductive transfer of the signal S1 to the second coil 5 by the first coil 4.

More specifically, the amplifier module 7 is a *driver* configured to amplify the voltage and the current supplied by the first processing unit 6 to respective values designed to control the coils 4, 5.

In the preferred embodiment, these values are between 11 and 13 VDC for the voltage and between 0.4 and 0.6 A for the current, preferably 12 VDC for the voltage and 0.5 A for the current, so as to define a signal transmission power of between 4.4 and 7.8 W, preferably 6 W.

The measuring unit 2 also comprises a respective processing unit, referred to below as the second processing unit 8, connected to the second coil 5 to receive the energy induced in the same second coil from the feed unit 3.

The measuring unit 2 also comprises a sensor 9 for measuring the forces, which can be fixed to the shaft 100, connected to the second processing unit 8 and configured for sending a signal S2 representing the forces measured.

Preferably, the sensor 9 is of the analogue type. More specifically, the sensor 9 comprises at least one extensometer 10 fixed to the shaft 100, preferably on its periphery.

Moreover, the sensor 9 comprises at least one Wheatstone bridge 11 comprising a plurality of resistors 11a (defined by the extensometers 10). Preferably, the sensor 9 comprises at least one pair of extensometers 10 (each comprising a resistor 11a of the Wheatstone bridge 11), thus defining a bridge with a ½ configuration.

In the preferred embodiment, however, the sensor 9 comprises four extensometers 10 (each comprising a resistor 11a of the Wheatstone bridge 11), thus defining a full configuration.

Each extensometer 10 is formed by an insulating plate on which a resistor is formed by means of conductive material (infinitesimal thickness). These extensometers 10 are fixed to the shaft 100 by gluing (using special resins), or in special cases they can be integrated in the shaft 100.

In use, when the extensometer 10 is subjected to a mechanical force which induces an elongation or contraction of the plate, the bridge is unbalanced and in the two measurement points produces an unbalancing voltage (of several millivolts, preferably approximately 5mV of full scale, more preferably with feeding at 5V).

Preferably, the resistors 11a of the Wheatstone bridge 11 have an electrical resistance of between 350/700 and 5000 Ohms, more preferably between 800 and 1200 Ohms, in particular 1000 Ohms.

In light of the presence of an analogue sensor 9, the measuring unit 2 also comprises an analogue-digital converter, hereafter referred to as A/D converter 12.

The A/D converter 12 is configured for performing from a minimum of 5 to a maximum of 15 conversions per second, preferably 10.

Advantageously, in this way it is possible to insert 50/60 Hz filters eliminating the noise generated by the magnetic fields at the network frequency from the above-mentioned signal S2 representing the forces measured, thus increasing the accuracy of the measurement; renouncing the 50/60 Hz filters the sampling may reach hundreds or thousands of samples per second thus allowing the measurement of twisting moments or other physical quantities which vary quickly over time.

Alternatively, as specified above, the sensor could be of a different type.

Preferably, in any case, the apparatus 1 is configured to operate with a frequency of between 10 and 20 kHz, and more preferably at approximately 15 kHz.

According to the invention, the measuring unit 2 also comprises a module 13 for storing the energy associated with the (second end 5b of the) second coil 5, that is, interposed between the second processing unit 8 and the (second end 5b of the) second coil 5.

The storage module 13 is designed to receive the energy induced from the first coil 4 to the second coil 5 and store the energy. Moreover, the storage module 13 is connected to the second processing unit 8 to supply the energy, during a predetermined interval of time, even in the case of an interruption in the transmission of energy between the first coil 4 and the second coil 5.

Preferably, the storage module 13 is defined at least in part by a capacitor 13a, designed for storing and maintaining between its armatures the energy accumulated.

This capacitor, preferably of a multilayer ceramic type, is capable of providing high capacity and at the same time small dimensions.

The measuring unit 2 also comprises means 14 for monitoring the transmission of energy from the first coil 4 to the second coil 5. The monitoring means 14 are associated with the second coil 5 and configured for checking the voltage at the ends of the coil.

In light of this, the monitoring means 14 are associated with the second processing unit 8 and configured for sending a signal S3 representing an interruption in the transmission of energy from the first coil 4 to the second coil 5.

In other words, as soon as the monitoring means 14 detect a drop below a threshold level of the voltage present at the terminals (and therefore a lack of induced current) of the second coil 5 they are designed to signal it to the second processing unit 8 by sending a suitable signal S3 representing that condition.

In the preferred embodiment, the monitoring means 14 are formed by a voltage comparator.

Preferably, the measuring unit 2 also comprises an energy recovery module 20 interposed between the (second end 5b of the) second coil 5 and the monitoring means 14.

It should be noted that the second processing unit 8 is also connected to the (first end 5a of the) second coil 5.

This second processing unit 8 is configured for sending to the second coil 5 a measurement signal S4 correlated with the signal S2 representing the forces measured, in response to receiving, by the monitoring means 14, the above-mentioned signal S3 representing, an interruption in the transmission of energy from the first coil 4 to the second coil 5.

Thus, the second processing unit 8 is configured for sending the measurement signal S4 (correlated with and/or representing the forces measured) to the feed unit 3 by an electromagnetic induction from the second coil 5 to the first coil 4, inverting the direction of transmission relative to the control signal S1.

It should be noted that the measurement signal S4 is generated by the second processing unit 8 following a processing and/or coding of the signal S2 representing the forces measured by the sensor 9.

In this regard, the first processing unit 6 is configured for sending to the first coil 4 a control signal S1 of variable intensity over time for a predetermined first interval of time (ΔT1), wherein the first coil 4 transfers energy to the second coil 5 by electromagnetic induction. Moreover, the first processing unit 6 is configured to interrupt the generation of the control signal S1 for a second interval of time ΔT2, wherein the transfer of energy from the first coil 4 to the second coil 5 is interrupted.

Preferably, the control signal S1 is a square wave signal, wherein the sequence of "raising" and "descending" faces allows the transmission of energy to the measuring unit 2.

Advantageously, it has been noted by experimental tests that this type of signal makes it possible to optimise the induction effect and the transfer of energy from the feed unit 3 to the measuring unit 2.

In effect, the use of a square wave control signal S1, under equal frequency conditions, provides a very high harmonic content, which is also easy to obtain.

It should be noted that the second interval of time ΔT2 immediately follows the first interval of time ΔT1 and their sequence is repeated cyclically in an interval of time ΔT = ΔT1+ΔT2.

The first processing unit 6, after having sent to the first coil 4 a certain number of whole square wave periods (corresponding to the first interval of time ΔT1) and, therefore, having transferred to the second coil 5 a sufficient quantity of energy, suspends the transmission during the second interval of time ΔT2.

The apparatus 1 has a position sensor 21 which can be associated with the shaft 100 to be monitored and designed for measuring its angular position.

The position sensor 21 is associated with the first processing unit 6 (that is, with the processing unit of the feed unit 3) and configured to provide information correlated with the angular position of the shaft 100 at each measurement.

The first processing unit 6 is designed to allow the setting (using, for example, the assembly of the sensor or a command programmed by an operator) of at least one predetermined angular position, at which the module 6a for generating the signal interrupts the generation of the control signal S1.

The programming or setting of the angular position (or reading angle) at which the reading occurs can, therefore, be performed upon the positioning of the sensor 21 and the parts which are used for its operation, or by means of a suitable software programme (using the interface module 16).

Thus, the first processing unit 6 is programmed to determine the duration of the time intervals ΔT1 and ΔT2 as a function of the reference angular position (or angular positions) set by the operator.

In other words, the first processing unit 6 is:
- prepared to receive the signal S5 correlated with the angular position of the shaft 100 from the position sensor 21;
- programmed to compare the signal S5 with at least one angular position value entered and
- configured to control the generating module 6a as a function of the comparison.

Thus, when the signal S5 sent by the position sensor 21 corresponds to an angular position of the shaft coinciding with that set, the first processing unit sends to the generating module a signal representing an interruption in the transfer of energy.

Advantageously, in this way it is possible to apply the apparatus according to this invention to any type of plant, also to those which use motors that are able to develop particularly large moments at very low motor revolutions, where it becomes very important to monitor the level of twisting at precise points of the angle followed by the shaft 100.

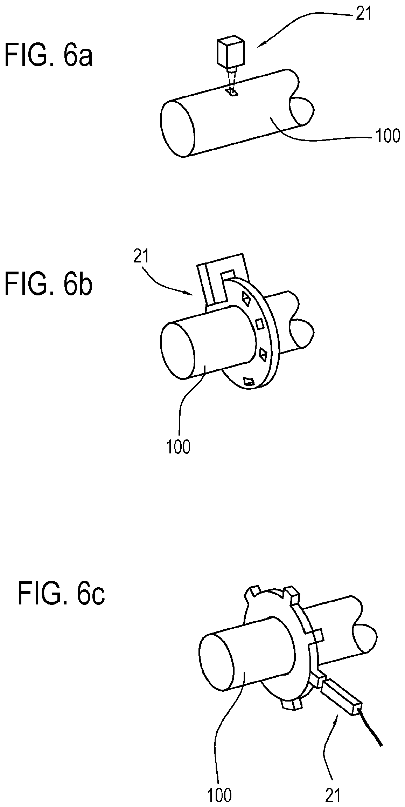

It should be noted that, preferably, the position sensor 21 is positioned close to the shaft 100 and it is, for example, an inductive *proximity switch* (Figure 6c).

Alternatively, the position sensor 21 could be defined by:
- a combination between a photosensor and a retroreflector tag fixed to the shaft (Figure 6a), or
- an infra-red barrier combined with a perforated element coupled to the shaft 100 (Figure 6b).

Preferably, the first control unit 6 is programmed for setting the first amplifier module 7 in a high impedance configuration, that is to say, in the third state, during the second interval of time ΔT2, in such a way as to simulate a complete disconnection of the first amplifier module 7 from the circuit, allowing transmission of the measurement signal S4 from the second coil 5 to the first coil 4.

Thus, during the above-mentionedsecond predetermined interval of time ΔT2, wherein the generating module 6a interrupts the generation of the control signal S1, the monitoring means 14 of the measuring unit 2 send to the second processing unit 8 the signal S3 representing an interruption in the transmission of energy. In response to receiving the signal S3, the second processing unit 8 sends to the second coil 5 a measurement signal S4 correlated with the signal S2 representing the forces measured by the sensor 9, which is transmitted by electromagnetic induction to the first coil 4.

In light of this, the storage module 13 of the measuring unit 2 is designed for storing energy when the generating module 6a generates the control signal S1 (in the first time interval ΔT1) and is designed for supplying at least part of the stored energy to the second processing unit 8 during the second time interval (ΔT2 (that is, when the generation of the control signal S1 is interrupted).

Advantageously, in this way it is possible to allow the transmission of the measurement signal S4 (which also represents the forces measured) to the feed unit 3 by an electromagnetic induction from the second coil 5 to the first coil 4 during the second time interval ΔT2.

It should be noted that, for this purpose, the second processing unit 8 is programmed for storing the data relative to the force status of the shaft 100, received through the signal S2 representing the forces measured by the sensor 9, during the first time intervals ΔT1, wherein the generating module 6a generates a control signal S1.

Thus, the measurement signal S4 corresponds to the sequence of the signals S2 representing the forces measured sent by the sensor 9 to the second processing unit 8 during a first time interval ΔT1.

In other words, the second processing unit 8 is programmed to act as a memory during feeding from the first coil 4 to the second coil 5 (that is, during the first time interval ΔT1) and to act as a data transmission module in the absence of that feeding (that is, during the second time interval ΔT2).

In this regard, the (second end 4b of the) first coil 4 is connected to the first processing unit 6, preferably using a data reception module 15, to send to the first processing unit 6, the measurement signal S4 (correlated with the forces measured).

The first processing unit 6 is thus configured to receive and process the measurement signal S4 and, preferably, send it to a control system (not illustrated) of the plant in which the shaft 100 is mounted.

Preferably, both the first 6 and the second 8 processing units comprise a microprocessor. More specifically, the microprocessor must have an extremely low current absorption (the microprocessor used to not be considered as a restriction is an 8 bit RISC microprocessor with 8 MHz clock frequencies. On the contrary, on the fixed part the microprocessor can be of any type as there are no particular constraints, either in terms of feed or speed.

Preferably, the measuring unit 2 also comprises an amplifier module 17 associated with the second processing unit 8, in particular operatively interposed between the second processing unit 8 and the first end 5a of the second coil 5.

The above-mentioned amplifier module 17 is configured for increasing the power of the measurement signal S4 up to a predetermined transmission value, so as to allow the inductive transfer of the signal S4 to the first coil 4 by the second coil 5.

In a similar fashion, the amplifier module 17 of the measuring unit 2 is defined by a *driver* configured to amplify the voltage and the current supplied by the second processing unit 8 to respective values designed to control the coils 4, 5.

In the preferred embodiment, the storage module 13 is also connected to the amplifier module 17 of the measuring unit 2 in order to keep it fed during the interruption of the energy transmission from the first coil 4 to the second coil 5 (that is to say, when the generating module 6a generates a control signal S1 equal to the second value).

Preferably, the storage module 13 comprises two separate devices 13a, each connected, respectively, to the second control unit 8 or to the amplifier module 17; the purpose of this is to allow the second control unit 8 to remain fed during suspension of the transfer of energy from the first coil 4 to the second coil 5 and at the same time provide a separate source of energy sufficient to support the transmission of the measurement signal S4 from the second coil 5 to the first coil 4.

More in detail, the storage module 13 comprises a first device defined by the capacitor 13a described above and a second device comprising one or more block diodes 13b connected to the amplifier module 17.

The block diodes 13b are low drop diodes (surface mounted) of *theSchottky barrier small signal diode* type.

In the preferred embodiment, the apparatus 1 comprises a module 16 for interfacing with the control system associated with the first processing unit 6 and configured to make the data measured (relative to the forces on the 100) available to the control system.

The data transfer (corresponding/correlated with the measurement signal S4) may occur in an analogue fashion, in the 0-10 VDC range (preferably 0-5 VDC), or by using a current channel in one of the following ranges:
- 0-20 mA;
- 4-20 mA;
- 20-0 mA;
- 20-4 mA.

Alternatively, the transfer may also be performed using a digital support (not illustrated), such as, for example, the RS-485, CanBus or similar standard.

It should be noted that the feed unit (or fixed unit) 3 and the measuring unit (or mobile unit) 2 are fully insulated from the galvanic point of view.

In other words, the feed unit 3 and the measuring unit 2 are connectable to separate parts of the plant 101 and do not have in common any electrically conductive parts, either for signalling or feeding.

More specifically, the reference grounds GND1, GND2, that is, the negative pole of each supply, are fully insulated (that is, independent) from each other.

Thus, the measuring unit 2 has a relative first ground GND1 and the feed unit 3 has a respective second ground GND2.

For this reason, thanks to the insulation of the grounds GND1, GND2, each unit (measuring 2 and feed 3) refers to the relative ground. Advantageously, this makes it possible to guarantee a greater immunity to electrical or magnetic disturbances.

In an industrial context this situation is considerably advantageous due to the electromagnetic type noise or large currents which centre on the ground, the potential often changes value creating difficult in transferring information.

Moreover, by keeping the grounds GND1, GND2 insulated, the measuring unit transfers the information to the feed unit 3 (in an electromagnetic form) using as reference potential that of the input, that is, that of feeding the feed unit 3. In light of this, the signal when the level is distinct and well-defined and, more specifically, eliminating, possible errors when the signal.

The invention achieves the proposed aims and brings significant advantages.

In effect, the apparatus according to this invention, wherein the feed and the data transmission follow the same path, in opposite directions, and occur by electromagnetic induction allows a dynamic measurement system to be obtained which is extremely precise, as well as easy and inexpensive to make.

Moreover, the use of a square wave control signal, under equal frequency conditions, provides a very high harmonic content, which is also easy to obtain.

In short, the measurement apparatus can be likened to an air-insulated transformer, that is, free of a core or laminated block since the majority of the flow lines pass mainly through the air and only a small part pass through the steel of the shaft.

## Claims

1. An apparatus for dynamic measurement of force on a body (100) subjected to twisting relative to a frame (101), comprising:
- a feed unit (3) which can be associated with the frame (101) and equipped with:
- a first coil (4) arranged coaxially to the body (100);
- a first processing unit (6) equipped with a generating module (6a) associated with the first coil (4) and designed for generating a control signal (S1) and sending it to the first coil (4) in such a way as to generate an electromagnetic field;
- a measuring unit (2) which can be at least partly fixed to the body (100) and equipped with:
- a second coil (5) wound on the body (100) in such a way as to be movable with it, positioned in such a way that it can be fed by the first coil (4) by electromagnetic induction;
- a second processing unit (8) connected to the second coil (5) for receiving the energy induced in the second coil (5) from the feed unit (3);
- a sensor (9) for measuring the force, which can be fixed to the body (100), connected to the second processing unit (8) and designed for sending to the second processing unit (8) a signal representing the at least one parameter monitored;
wherein the measuring unit (2) also comprises:
- a module (13) for storing the energy associated with the second coil (5), designed for receiving the energy induced by the first coil (4) and connected to the second processing unit (8);
- means (14) associated with the second processing unit (8) for monitoring the transmission of energy from the first coil (4) to the second coil (5) and configured for sending a signal (S3) to the second processing unit (8) representing an interruption in the transmission of energy from the first coil (4) to the second coil (5), and in that the second processing unit (8) is designed for sending to the second coil (5) a measurement signal (S4) correlated with the signal (S2) representing the at least one parameter monitored, in response to a reception, from the monitoring means (14), of the signal (S3) so as to transmit the measurement signal (S4) to the feed unit (3) by electromagnetic induction from the second coil (5) to the first coil (4); **characterised in that** it comprises a position sensor (21) which can be associated with the shaft (100) to be monitored and designed to measure the angular position of the shaft (100) during its rotation, wherein the position sensor (12) is operatively associated with the first processing unit (6) and configured to supply to the first processing unit (6) a signal (S5) representing the angular position of the shaft (100); the first processing unit (6) being:
- prepared to receive from the position sensor (21) the signal (S5) representing the angular position of the shaft (100),
- programmed to compare the signal (S5) with at least one angular position value entered and
- configured to control the generating module (6a) depending on said comparison;
and **in that** the measuring unit (2) and the feed unit (3) have, respectively, a first reference ground (GND1) and a second reference ground (GND) completely insulated from each other, so that the feed unit (3) and the measuring unit (2) are fully insulated from a galvanic point of view.

2. The measurement apparatus according to claim 1, **characterised in that** the generating module (6a) of the first processing unit (6) is designed for sending to the first coil (4) a control signal (S1) of variable intensity over time for a predetermined first time interval (ΔT1) with which the first coil (4) transfers energy to the second coil (5) by electromagnetic induction, and to interrupt generation of the control signal (S1) for a second time interval (ΔT2) after the first time interval (ΔT1) to interrupt the transmission of energy from the first coil (4).

3. The measurement apparatus according to claim 2, **characterised in that** the control signal (S1) has a square wave trend, variable in a step between a first and a second value.

4. The measurement apparatus according to claim 2 or 3, **characterised in that** the storage module (13) of the measuring unit (2) is designed for storing energy during each first time interval (ΔT1) and is designed for supplying at least part of the stored energy to the second processing unit (8) during each second time interval (ΔT2).

5. The measurement apparatus according to claim 1, **characterised in that** the feed unit (3) comprises an interface module (16) connected to the first processing unit (6) and designed to allow a setting of the value of at least a predetermined angular position of reference.

6. The measurement apparatus according to any one of the preceding claims, **characterised in that** the feed unit (3) comprises an amplifier module (7) associated with the generating module (6a) of the first processing unit (6) and designed for increasing the power of the control signal (S1) up to a predetermined transmission value so as to allow the inductive feed of the second coil (5) by the first coil (4).

7. The measurement apparatus according to any one of the preceding claims, **characterised in that** the measuring unit (2) comprises an amplifier module (17) associated with the second processing unit (8) and designed for increasing the power of the measurement signal (S4) up to a predetermined transmission value so as to allow the inductive transfer of the signal to the first coil (4) by the second coil (5).

8. The measurement apparatus according to any one of the preceding claims, **characterised in that** the sensor (9) comprises an extensometer (10) rigidly connectable to the body (100).

9. The measurement apparatus according to claim 8, **characterised in that** the sensor (9) comprises at least one pair of extensometers (10) each forming a resistor (11a) of a Wheatstone bridge (11); the at least one parameter corresponding to a twisting force of the body (100).

10. The measurement apparatus according to any one of the preceding claims, **characterised in that** the first coil (4) and the second coil (5) are each wound on a respective support (18, 19) with an annular shape made from non-ferromagnetic material so as not to interfere with the magnetic field generated by the coils (4, 5).

11. The measurement apparatus according to any one of the preceding claims, **characterised in that** the first coil (4) is coaxial with and facing the second coil (5), positioned at a distance from it of between 1 and 50mm.

12. The measurement apparatus according to any one of the preceding claims, **characterised in that** the feed unit (3) comprises an interface module (16) connected to the first processing unit (6) and designed for communicating with a control system to send to the control system the measurement signal (S4) and/or an alarm signal when a threshold value of the forces measured is exceeded.

13. The measurement apparatus according to any one of the preceding claims, **characterised in that** the feed unit (3) comprises a data reception module (15) associated with the first coil (4), designed for receiving the measurement signal (S4) and configured for sending it to the first processing unit (6).

14. An industrial plant comprising:
- a base;
- a fixed frame (101) rising from the base;
- at least one shaft (100) rotatable about a relative axis of rotation;
- an apparatus (1) for dynamic measurement of the twisting forces associated with the shaft (100);
- a user interface provided with at least one module for displaying data and at least one module for entering parameters both associated with the measurement apparatus (1) and configured to allow a two-way exchange of data;
**characterised in that** the dynamic measurement apparatus (1) is a measurement apparatus according to any one of the preceding claims.

## Patentansprüche

1. Vorrichtung zur dynamischen Messung der Kraft auf einen Körper (100), der einer Verdrehung relativ zu einem Rahmen (101) unterzogen ist, umfassend:
- eine Speiseeinheit (3), die mit dem Rahmen (101) assoziiert werden kann und ausgestattet ist mit:
- einer ersten Spule (4), die koaxial zum Körper (100) angeordnet ist;
- einer ersten Verarbeitungseinheit (6), die mit einem Erzeugungsmodul (6a) ausgestattet ist, das mit der ersten Spule (4) assoziiert und ausgelegt ist, um ein Steuersignal (S1) zu erzeugen und es an die erste Spule (4) zu senden, um ein elektromagnetisches Feld zu erzeugen;
- einer Messeinheit (2), die zumindest teilweise am Körper (100) befestigt und ausgestattet werden kann mit:
- einer zweiten Spule (5), die so auf den Körper (100) gewickelt ist, dass sie mit ihm beweglich ist und so positioniert ist, dass sie durch elektromagnetische Induktion von der ersten Spule (4) gespeist werden kann;
- einer zweiten Verarbeitungseinheit (8), die mit der zweiten Spule (5) verbunden ist, um die in der zweiten Spule (5) induzierte Energie von der Speiseeinheit (3) zu empfangen;
- einem Sensor (9) zum Messen der Kraft, der an dem Körper (100) befestigt werden kann, mit der zweiten Verarbeitungseinheit (8) verbunden und zum Senden eines Signals an die zweite Verarbeitungseinheit (8) ausgelegt, das den mindestens einen überwachten Parameter darstellt;
wobei die Messeinheit (2) auch umfasst:
- ein Modul (13) zum Speichern der mit der zweiten Spule (5) assoziierten Energie, das zum Empfangen der von der ersten Spule (4) induzierten und mit der zweiten Verarbeitungseinheit (8) verbundenen Energie ausgelegt ist;
- Mittel (14), die mit der zweiten Verarbeitungseinheit (8) zur Überwachung der Energieübertragung von der ersten Spule (4) zur zweiten Spule (5) assoziiert und zum Senden eines Signals (S3) an die zweite Verarbeitungseinheit (8) konfiguriert sind, das eine Unterbrechung bei der Energieübertragung von der ersten Spule (4) zur zweiten Spule (5) darstellt, und dadurch, dass die zweite Verarbeitungseinheit (8) zum Senden eines Messsignals (S4) an die zweite Spule (5) ausgelegt ist, das mit dem Signal (S2) korreliert ist, das den mindestens einen überwachten Parameter, als Reaktion auf einen Empfang von den Überwachungsmitteln (14), des Signals (S3) darstellt, um das Messsignal (S4) an die Speiseeinheit (3) durch elektromagnetische Induktion von der zweiten Spule (5) zur ersten Spule (4) zu übertragen; **dadurch gekennzeichnet, dass** sie einen Positionssensor (21) umfasst, der mit der zu überwachenden Welle (100) assoziiert werden kann und die ausgelegt ist, um die Winkelposition der Welle (100) während ihrer Drehung zu messen, wobei der Positionssensor (12) betriebswirksam mit der ersten Verarbeitungseinheit (6) assoziiert und konfiguriert ist, um der ersten Verarbeitungseinheit (6) ein Signal (S5) zuzuführen, das die Winkelposition der Welle (100) darstellt; wobei die erste Verarbeitungseinheit (6) ist:
- bereitgestellt, um vom Positionssensor (21) das Signal (S5) zu empfangen, das die Winkelposition der Welle (100) darstellt,
- programmiert, um das Signal (S5) mit mindestens einem eingegebenen Winkelpositionswert zu vergleichen und
- konfiguriert, um das Erzeugungsmodul (6a) in Abhängigkeit von diesem Vergleich zu steuern;
und dadurch, dass die Messeinheit (2) und die Speiseeinheit (3) jeweils eine erste Bezugsmasse (GND1) und eine zweite Bezugsmasse (GND) aufweisen, die vollständig voneinander isoliert sind, so dass die Speiseeinheit (3) und die Messeinheit (2) aus galvanischer Sicht vollständig isoliert sind.

2. Messvorrichtung nach Anspruch 1, **dadurch gekennzeichnet, dass** das Erzeugungsmodul (6a) der ersten Verarbeitungseinheit (6) ausgelegt ist, um ein Steuersignal (S1) mit variabler Intensität über die Zeit für ein vorbestimmtes erstes Zeitintervall (ΔT1) an die erste Spule (4) zu senden, mit dem die erste Spule (4) durch elektromagnetische Induktion Energie auf die zweite Spule (5) transferiert, und um die Erzeugung des Steuersignals (S1) für ein zweites Zeitintervall (ΔT2) nach dem ersten Zeitintervall (ΔT1) zu unterbrechen, um die Energieübertragung von der ersten Spule (4) zu unterbrechen.

3. Messvorrichtung nach Anspruch 2, **dadurch gekennzeichnet, dass** das Steuersignal (S1) einen Rechteckwellentrend aufweist, der in einem Schritt zwischen einem ersten und einem zweiten Wert variabel ist.

4. Messvorrichtung nach Anspruch 2 oder 3, **dadurch gekennzeichnet, dass** das Speichermodul (13) der Messeinheit (2) zum Speichern von Energie während jedes ersten Zeitintervalls (ΔT1) ausgelegt ist und zum Zuführen von mindestens einem Teil der gespeicherten Energie an die zweite Verarbeitungseinheit (8) während jedes zweiten Zeitintervalls (ΔT2) ausgelegt ist.

5. Messvorrichtung nach Anspruch 1, **dadurch gekennzeichnet, dass** die Speiseeinheit (3) ein Schnittstellenmodul (16) umfasst, das mit der ersten Verarbeitungseinheit (6) verbunden und so ausgelegt ist, dass eine Einstellung des Wertes von mindestens einer vorbestimmten Referenzwinkelposition ermöglicht wird.

6. Messvorrichtung nach einem der vorhergehenden Ansprüche, **dadurch gekennzeichnet, dass** die Speiseeinheit (3) ein Verstärkermodul (7) umfasst, das mit dem Erzeugungsmodul (6a) der ersten Verarbeitungseinheit (6) assoziiert ist und zum Erhöhen der Leistung des Steuersignals (S1) bis zu einem vorbestimmten Übertragungswert ausgelegt ist, um die induktive Speisung der zweiten Spule (5) durch die erste Spule (4) zu ermöglichen.

7. Messvorrichtung nach einem der vorhergehenden Ansprüche, **dadurch gekennzeichnet, dass** die Messeinheit (2) ein Verstärkermodul (17) umfasst, das mit der zweiten Verarbeitungseinheit (8) assoziiert ist und zum Erhöhen der Leistung des Messsignals (S4) bis zu einem vorbestimmten Übertragungswert ausgelegt ist, um den induktiven Transfer des Signals zur ersten Spule (4) durch die zweite Spule (5) zu ermöglichen.

8. Messvorrichtung nach einem der vorhergehenden Ansprüche, **dadurch gekennzeichnet, dass** der Sensor (9) einen Extensometer (10) umfasst, der starr mit dem Körper (100) verbindbar ist.

9. Messvorrichtung nach Anspruch 8, **dadurch gekennzeichnet, dass** der Sensor (9) mindestens ein Paar Extensometer (10) umfasst, die jeweils einen Widerstand (11a) einer Wheatstone-Brücke (11) bilden; wobei der mindestens eine Parameter einer Verdrehkraft des Körpers (100) entspricht.

10. Messvorrichtung nach einem der vorhergehenden Ansprüche, **dadurch gekennzeichnet, dass** die erste Spule (4) und die zweite Spule (5) jeweils auf einen jeweiligen Träger (18, 19) mit einer ringförmigen Form aus nicht ferromagnetischem Material gewickelt sind, um das von den Spulen (4, 5) erzeugte Magnetfeld nicht zu stören.

11. Messvorrichtung nach einem der vorhergehenden Ansprüche, **dadurch gekennzeichnet, dass** die erste Spule (4) koaxial zu der zweiten Spule (5) ist und dieser zugewandt ist und in einem Abstand von 1 bis 50 mm von ihr positioniert ist.

12. Messvorrichtung nach einem der vorhergehenden Ansprüche, **dadurch gekennzeichnet, dass** die Speiseeinheit (3) ein Schnittstellenmodul (16) umfasst, das mit der ersten Verarbeitungseinheit (6) verbunden ist und zur Kommunikation mit einem Steuersystem zum Senden an das Steuerungssystem das Messsignal (S4) und/oder ein Alarmsignal ausgelegt ist, wenn ein Schwellenwert der gemessenen Kräfte überschritten wird.

13. Messvorrichtung nach einem der vorhergehenden Ansprüche, **dadurch gekennzeichnet, dass** die Speiseeinheit (3) ein Datenempfangsmodul (15) umfasst, das mit der ersten Spule (4) assoziiert ist, das zum Empfangen des Messsignals (S4) ausgelegt und konfiguriert ist, um es an die erste Verarbeitungseinheit (6) zu senden.

14. Industrieanlage umfassend:
- eine Basis;
- einen festen Rahmen (101), der sich von der Basis erhebt;
- mindestens eine Welle (100), die um eine relative Drehachse drehbar ist;
- eine Vorrichtung (1) zur dynamischen Messung der mit der Welle (100) assoziierten Verdrehkräfte;
- eine Benutzerschnittstelle, die mit mindestens einem Modul zum Anzeigen von Daten und mindestens einem Modul zum Eingeben von Parametern versehen ist, die beide mit der Messvorrichtung (1) assoziiert und so konfiguriert sind, dass sie einen wechselseitigen Datenaustausch ermöglichen;
**dadurch gekennzeichnet, dass** die dynamische Messvorrichtung (1) eine Messvorrichtung nach einem der vorhergehenden Ansprüche ist.

## Revendications

1. Appareil de mesure dynamique de la force exercée sur un corps (100) soumis à une torsion par rapport à un cadre (101), comprenant :
- une unité d'alimentation (3) pouvant être associée au cadre (101) et équipée :
- d'une première bobine (4) disposée coaxialement au corps (100) ;
- une première unité de traitement (6) équipée d'un module de génération (6a) associé à la première bobine (4) et conçu pour générer un signal de commande (S1) et l'envoyer à la première bobine (4) de manière à générer un champ électromagnétique ;
- une unité de mesure (2) pouvant être au moins partiellement fixée au corps (100) et équipée :
- d'une seconde bobine (5) enroulée sur le corps (100) de manière à être mobile avec celui-ci, positionnée de manière à pouvoir être alimentée par la première bobine (4) par induction électromagnétique ;
- d'une seconde unité de traitement (8) reliée à la seconde bobine (5) pour recevoir l'énergie induite dans la seconde bobine (5) à partir de l'unité d'alimentation (3) ;
- d'un capteur (9), servant à mesurer la force, pouvant être fixé sur le corps (100), connecté à la seconde unité de traitement (8) et conçu pour envoyer à la seconde unité de traitement (8) un signal représentant l'au moins un paramètre surveillé ;
dans lequel l'unité de mesure (2) comprend de plus :
- un module (13), servant à stocker l'énergie, associé à la seconde bobine (5), conçu pour recevoir l'énergie induite par la première bobine (4) et relié à la seconde unité de traitement (8) ;
- des moyens (14), associés à la seconde unité de traitement (8), servant à surveiller la transmission d'énergie de la première bobine (4) à la seconde bobine (5) et configurés pour envoyer un signal (S3) à la seconde unité de traitement (8) représentant une interruption dans la transmission d'énergie de la première bobine (4) à la seconde bobine (5), et en ce que la seconde unité de traitement (8) est conçue pour envoyer à la seconde bobine (5) un signal de mesure (S4) corrélé au signal (S2) représentant l'au moins un paramètre surveillé, en réponse à une réception, à partir des moyens de surveillance (14) du signal (S3), de manière à transmettre le signal de mesure (S4) à l'unité d'alimentation (3) par induction électromagnétique de la seconde bobine (5) à la première bobine (4) ; **caractérisé en ce qu'**il comprend un capteur de position (21) pouvant être associé à l'arbre (100) à surveiller et conçu pour mesurer la position angulaire de l'arbre (100) pendant sa rotation, dans lequel le capteur de position (12) est fonctionnellement associé à la première unité de traitement (6) et configuré pour fournir à la première unité de traitement (6) un signal (S5) représentant la position angulaire de l'arbre (100) ; la première unité de traitement (6) étant :
- préparée pour recevoir du capteur de position (21) le signal (S5) représentant la position angulaire de l'arbre (100),
- programmée pour comparer le signal (S5) à au moins une valeur de position angulaire entrée et
- configurée pour commander le module de génération (6a) selon ladite comparaison ;
et **en ce que** l'unité de mesure (2) et l'unité d'alimentation (3) ont, respectivement, une première mise à la terre (GND1) de référence et une seconde mise à la terre (GND) de référence complètement isolées l'une de l'autre, de sorte que l'unité d'alimentation (3) et l'unité de mesure (2) sont complètement isolées d'un point de vue galvanique.

2. Appareil de mesure selon la revendication 1, **caractérisé en ce que** le module de génération (6a) de la première unité de traitement (6) est conçu pour envoyer à la première bobine (4) un signal de commande (S1) d'intensité variable dans le temps pendant un premier intervalle de temps (ΔT1) prédéterminé avec lequel la première bobine (4) transfère de l'énergie à la seconde bobine (5) par induction électromagnétique, et pour interrompre la génération du signal de commande (S1) pendant un second intervalle de temps (ΔT2) après le premier intervalle de temps (ΔT1) pour interrompre la transmission d'énergie à partir de la première bobine (4) .

3. Appareil de mesure selon la revendication 2, **caractérisé en ce que** le signal de commande (S1) a un développement à onde carrée, variable selon un pas entre une première et une deuxième valeur.

4. Appareil de mesure selon la revendication 2 ou 3, **caractérisé en ce que** le module de stockage (13) de l'unité de mesure (2) est conçu pour stocker de l'énergie pendant chaque premier intervalle de temps (ΔT1) et est conçu pour fournir au moins une partie de l'énergie stockée à la seconde unité de traitement (8) pendant chaque second intervalle de temps (ΔT2).

5. Appareil de mesure selon la revendication 1, **caractérisé en ce que** l'unité d'alimentation (3) comprend un module d'interface (16) connecté à la première unité de traitement (6) et conçu pour permettre un réglage de la valeur d'au moins une position angulaire prédéterminée de référence.

6. Appareil de mesure selon l'une quelconque des revendications précédentes, **caractérisé en ce que** l'unité d'alimentation (3) comprend un module amplificateur (7) associé au module de génération (6a) de la première unité de traitement (6) et conçu pour augmenter la puissance du signal de commande (S1) jusqu'à une valeur de transmission prédéterminée de manière à permettre l'alimentation inductive de la seconde bobine (5) par la première bobine (4).

7. Appareil de mesure selon l'une quelconque des revendications précédentes, **caractérisé en ce que** l'unité de mesure (2) comprend un module amplificateur (17) associé à la seconde unité de traitement (8) et conçu pour augmenter la puissance du signal de mesure (S4) jusqu'à une valeur de transmission prédéterminée afin de permettre le transfert inductif du signal à la première bobine (4) par la seconde bobine (5).

8. Appareil de mesure selon l'une quelconque des revendications précédentes, **caractérisé en ce que** le capteur (9) comprend un extensomètre (10) pouvant être relié de façon rigide au corps (100).

9. Appareil de mesure selon la revendication 8, **caractérisé en ce que** le capteur (9) comprend au moins une paire d'extensomètres (10) formant chacun une résistance (11a) d'un pont de Wheatstone (11) ; l'au moins un paramètre correspondant à une force de torsion du corps (100).

10. Appareil de mesure selon l'une quelconque des revendications précédentes, **caractérisé en ce que** la première bobine (4) et la seconde bobine (5) sont chacune enroulées sur un support (18, 19) respectif, de forme annulaire, réalisé en matériau non ferromagnétique de manière à ne pas interférer avec le champ magnétique généré par les bobines (4, 5).

11. Appareil de mesure selon l'une quelconque des revendications précédentes, **caractérisé en ce que** la première bobine (4) est coaxiale et fait face à la seconde bobine (5), en étant positionnée à une distance de celle-ci comprise entre 1 et 50 mm.

12. Appareil de mesure selon l'une quelconque des revendications précédentes, **caractérisé en ce que** l'unité d'alimentation (3) comprend un module d'interface (16) connecté à la première unité de traitement (6) et conçu pour communiquer avec un système de commande afin d'envoyer au système de commande le signal de mesure (S4) et/ou un signal d'alarme lorsqu'une valeur de seuil des forces mesurées est dépassée.

13. Appareil de mesure selon l'une quelconque des revendications précédentes, **caractérisé en ce que** l'unité d'alimentation (3) comprend un module de réception (15) de données, associé à la première bobine (4), conçu pour recevoir le signal de mesure (S4) et configuré pour l'envoyer à la première unité de traitement (6).

14. Installation industrielle comprenant :
- une base ;
- un châssis fixe (101) se dressant de la base ;
- au moins un arbre (100) pouvant tourner autour d'un axe de rotation correspondant ;
- un appareil (1) de mesure dynamique des forces de torsion associées à l'arbre (100) ;
- une interface utilisateur pourvue d'au moins un module destiné à afficher des données et au moins un module servant à entrer des paramètres, tous deux associés à l'appareil de mesure (1) et configurés pour permettre un échange de données dans les deux sens ;
**caractérisée en ce que** l'appareil de mesure dynamique (1) est un appareil de mesure selon l'une quelconque des revendications précédentes.
